# DEMANDE DE BREVET EUROPEEN

(11) **EP 1 568 527 A1**
(43) Date de publication de la demande: **31.08.2005**
(21) Numéro de dépôt: 05290376.2
(22) Date de dépôt: 18.02.2005
(51) Int. Cl.: B60J 1/20

(54) **Pare-soleil amélioré pour véhicle automobile, et portière de véhicule équipée d'un tel pare-soleil**

(30) Priorité: 27.02.2004 FR 0402059
(71) Demandeur: Faurecia Interieur Industrie, 92000 Nanterre (FR)
(72) Inventeur: Guerreiro, Pierre, 95110 Sannois (FR); Beau, Godefroy, 60114 Meru (FR)
(74) Mandataire: Domenego, Bertrand

(57) **Abrégé**

Ce pare-soleil comprend :
- un écran de protection (11) ayant une pluralité de sections (13) reliées entre elles par des charnières (15), ledit écran pouvant prendre une position pliée dans laquelle les sections (13) sont repliées les unes sur les autres, et une position déployée dans laquelle les sections (13) sont dépliées,
- des moyens de rappel élastique associés à l'écran (11) et exerçant un effort de rappel à l'encontre du déploiement de l'écran à partir de sa position pliée,
Les moyens de rappel comprennent les charnières (15) reliant les sections.

L'invention concerne également une portière de véhicule automobile comprenant un tel pare-soleil.

## Description

La présente invention concerne un pare-soleil pour véhicule automobile comprenant :
- un écran de protection ayant une pluralité de sections reliées entre elles par des charnières, ledit écran pouvant prendre une position pliée dans laquelle les sections sont repliées les unes sur les autres, et une position déployée dans laquelle les sections sont dépliées,
- des moyens de rappel élastique associés à l'écran et exerçant un effort de rappel à l'encontre du déploiement de l'écran à partir de sa position pliée.

On connaît dans l'état de la technique de tels pare-soleil, qui sont généralement associés à des mécanismes de déploiement et de rétractation. Certains de ces mécanismes assurent un rappel élastique de l'écran en position pliée au moyen de câbles élastiques.

Tous ces mécanismes mettent en jeu un nombre important de pièces, d'autant qu'il est nécessaire d'assurer le guidage des câbles et que cette fonction est réalisée par des pièces spécifiques. Ils sont en outre fragiles et sujets à certains dysfonctionnements, dus par exemple à des coincements de câble ou des grippages de poulies.

L'invention a pour but de remédier à ces inconvénients et de proposer une structure de pare-soleil du type exposé ci-dessus, qui soit de plus grande simplicité et de plus grande fiabilité.

A cet effet, dans un pare-soleil conforme à l'invention, les moyens de rappel comprennent les charnières reliant les sections.

Suivant d'autres caractéristiques de l'invention, prises seules ou selon toutes les combinaisons techniquement envisageables :
- l'écran est réalisé au moins partiellement dans un matériau à mémoire de forme ayant une forme initiale pliée ;
- la forme initiale de l'écran est une forme pliée en accordéon ou en créneaux ;
- l'écran dans sa forme initiale présente en outre un pliage secondaire suivant lequel chaque section est elle-même pliée;
- le pare-soleil comprend des moyens de fixation à une partie de véhicule, agencés au niveau d'un bord de l'écran, et des moyens d'accrochage à une autre partie du véhicule, agencés au niveau d'un bord opposé de l'écran, et qui permettent de maintenir l'écran dans sa position déployée à l'encontre de l'effort de rappel élastique ; et
- le pare-soleil comprend une poignée de manoeuvre solidaire de l'écran au niveau d'un bord de ce dernier.

L'invention vise également une portière de véhicule automobile comprenant un caisson, et un pare-soleil tel que décrit précédemment, solidaire du caisson.

Suivant d'autres caractéristiques, optionnelles, de la portière conforme à l'invention :
- le caisson présente une ouverture au niveau d'une face supérieure, et l'écran est escamoté dans le caisson dans sa position pliée, tandis qu'il fait saillie du caisson au travers de ladite ouverture dans sa position déployée ;
- dans la position pliée de l'écran, la poignée de manoeuvre fait saillie du caisson ; et
- la portière comprend un cadre de vitre, solidaire du caisson, et ledit cadre est muni de moyens complémentaires d'accrochage prévus pour coopérer avec les moyens d'accrochage du pare-soleil.

Des modes particuliers de réalisation de l'invention vont maintenant être décrits plus en détail, en référence aux dessins annexés, sur lesquels :
- la Figure 1 est une vue schématique partielle en perspective d'une portière dotée d'un pare-soleil conforme à un premier mode de réalisation de l'invention ;
- la Figure 2 est une vue schématique en section transversale, dans un plan vertical, d'un écran de pare-soleil conforme à un deuxième mode de réalisation de l'invention ; et
- la Figure 3 est une vue analogue à la Figure 2, montrant l'écran d'un pare-soleil conforme à un troisième mode de réalisation de l'invention.

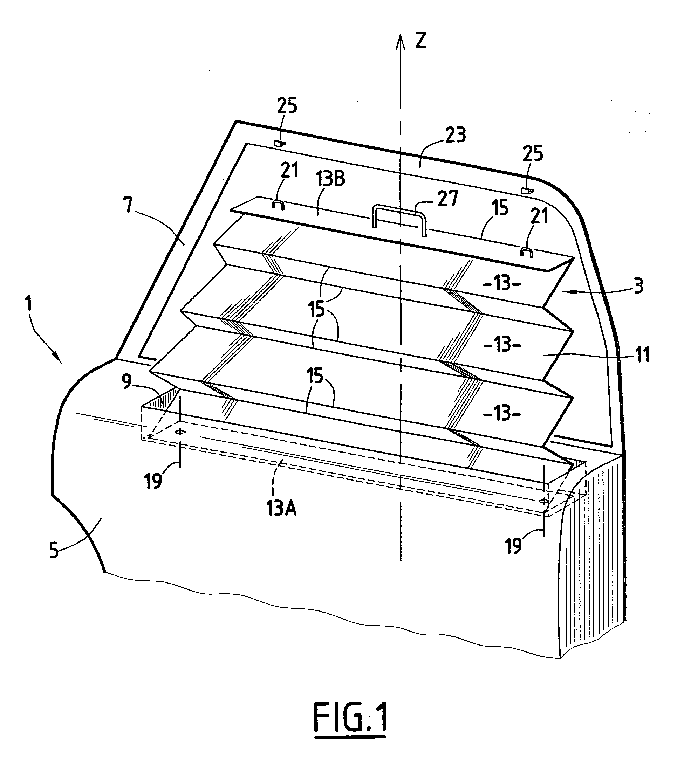

Sur la Figure 1, on a représenté partiellement une portière 1 de véhicule automobile, dotée d'un pare-soleil 3 conforme à l'invention, qui peut être soit escamoté, soit déployé pour protéger les occupants de rayonnements solaires traversant la partie vitrée de la portière.

Sur cette figure, la portière 1 est supposée orientée conformément à sa position montée sur véhicule, et l'axe Z indiqué est supposé vertical. Les termes d'orientation et de position utilisés par la suite s'entendront en référence à cette position montée et à cet axe.

La portière 1 comprend essentiellement un caisson creux 5 à l'intérieur duquel sont logés des équipements, une vitre (non représentée), un cadre de vitre 7 solidaire du caisson, et le pare-soleil 3.

Sur une face supérieure, le caisson 5 est formé avec une ouverture 9 donnant accès à son volume intérieur.

Le pare-soleil 3 comprend un écran de protection 11 pouvant être plié et déplié par un utilisateur, entre deux positions extrêmes, l'une complètement pliée et l'autre complètement déployée, selon l'axe Z.

A cet effet, l'écran de protection 11 présente une pluralité de sections adjacentes, sous la forme de bandes 13, jointives selon des lignes parallèles 15, parallèles entre elles et sensiblement horizontales.

Dans la forme de réalisation représentée sur la Figure 1, le pliage de l'écran 11 est dit « en accordéon », les charnières 15 (ou lignes de pliage) se situant alternativement de part et d'autre d'un plan moyen de l'écran.

Les charnières 15 définissent en outre, dans cette forme de réalisation, des bandes de même largeur.

Ainsi, en position pliée de l'écran, les sections 13 sont empilées les unes sur les autres, et l'écran présente une largeur égale à la largeur de chaque section. L'écran plié possède un encombrement en hauteur très réduit, sensiblement égal à l'épaisseur d'une section multipliée par le nombre de sections.

La bande d'extrémité inférieure 13 est intégrée à l'intérieur du caisson 5, et fixée à ce dernier par l'intermédiaire de moyens complémentaires de fixation, représentés schématiquement par des traits mixtes 19. Les moyens complémentaires de fixation du pare-soleil et du caisson 5 peuvent fonctionner par encliquetage, vissage, ou tout autre mode de fixation adapté.

La bande d'extrémité inférieure 13A est fixée à l'intérieur du caisson en regard de l'ouverture 9.

Au niveau de la bande d'extrémité supérieure 13B, l'écran 11 est doté de moyens d'accrochage, par exemple sous la forme d'arceaux 21, comme cela a été représenté sur la Figure 1. De façon correspondante, le cadre 7, au niveau de sa barre supérieure horizontale 23, est doté de moyens d'accrochage complémentaires, sous la forme, dans l'exemple représenté, de crochets 25.

En outre, le pare-soleil 3 comporte une poignée de manoeuvre 27 solidaire de l'écran 11 au niveau de la bande d'extrémité supérieure 13B, cette poignée 27 permettant à un utilisateur de déplier ou de plier l'écran 11.

Afin de rappeler l'écran 11 vers sa position pliée, le pare-soleil 3 est doté de moyens de rappel élastiques qui sont intégrés à l'écran 11 lui-même. Selon l'invention, les charnières 15 de l'écran 11 exercent cet effet de rappel élastique vers la position pliée.

A cet effet, l'écran 11 est réalisé dans un matériau à mémoire de forme, dont la forme initiale correspond à la position pliée, dans laquelle les sections ou bandes 13 sont repliées les unes sur les autres.

C'est ainsi que le déploiement de l'écran 11 à partir de sa position pliée, sous l'effet d'une traction exercée par un utilisateur sur la poignée 27 selon l'axe Z, s'effectue à l'encontre de l'effort de rappel élastique des charnières 15.

On comprend que les moyens d'accrochage complémentaires 21, 25 permettent de maintenir l'écran 11 dans sa position déployée à l'encontre de l'effort de rappel élastique des charnières 15. Il suffit à un utilisateur, pour replacer l'écran 11 dans sa position pliée à partir de la position déployée, maintenue par les moyens d'accrochage, de désaccoupler ces moyens d'accrochage, sans qu'aucun effort de traction de l'utilisateur ne soit ensuite requis.

Afin d'améliorer l'esthétique générale de la portière 1 dotée du pare-soleil 3, il est prévu que l'écran 11, dans sa position pliée, soit totalement escamoté dans le caisson 5. Seule la poignée 27 fait alors saillie à l'extérieur de ce dernier afin de pouvoir être saisie par l'utilisateur.

Bien entendu, il est possible de doter d'autres parties vitrées du véhicule d'un pare-soleil tel que décrit précédemment, ce dernier pouvant être logé dans des parties creuses de carrosserie autres que des caissons de porte, ou dans des pièces d'équipement intérieur. Le pare-soleil peut également être fixé à l'extérieur de tels caissons, parties de carrosseries ou autres pièces d'équipement intérieur. De la même façon, il est possible de prévoir d'accrocher, ou plus généralement de fixer, l'écran en position déployée, au niveau de toute partie adaptée du véhicule, en particulier au niveau du pavillon.

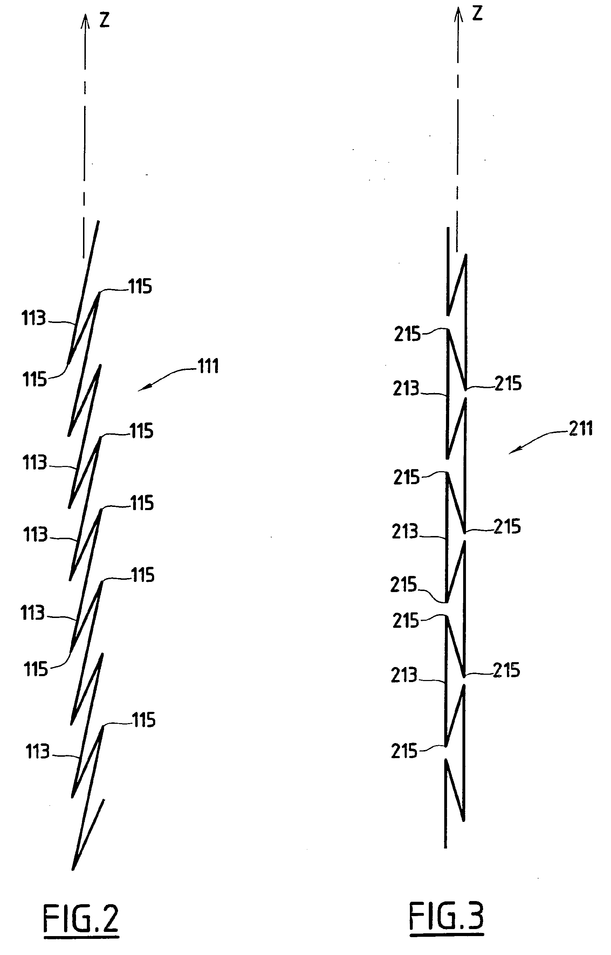

Sur la Figure 2, on a représenté l'écran 111 d'un pare-soleil conforme à un deuxième mode de réalisation de l'invention, en configuration pliée.

L'écran de ce pare-soleil est analogue à celui représenté sur la Figure 1, seul le type de pliage donnant sa forme à l'écran 111 étant différent.

Dans cet exemple de réalisation, l'écran 111 est également plié selon une forme dans laquelle les charnières 115 (ou lignes de pliage) se situent alternativement de part et d'autre d'un plan moyen. Ce plan moyen est matérialisé par l'axe Z sur la Figure 2.

Contrairement à la forme de réalisation de la Figure 1, les sections ou bandes 113 ne sont pas toutes de même largeur, mais alternativement de largeur simple et double.

Sur la Figure 3, on a représenté l'écran 211 d'un pare-soleil conforme à un troisième mode de réalisation de l'invention, en configuration pliée.

Dans cet exemple de réalisation, l'écran 211 est plié en créneaux, les bandes 213 qui définissent les sections parallèles d'écran étant situées alternativement de part et d'autre d'un plan moyen de l'écran, tandis que les charnières 215 se succèdent par paire de part et d'autre de ce plan moyen (indiqué par l'axe Z sur la Figure 3).

Les exemples de réalisation des Figures 2 et 3 ont pour objet des écrans qui présentent, en configuration pliée, un encombrement en hauteur important (supérieur à l'encombrement en hauteur de l'écran plié conformément à la solution représentée sur la Figure 1). En revanche, ces solutions ont l'avantage d'un encombrement en largeur très faible.

Quel que soit le pliage adopté, en particulier parmi les trois modes de pliage décrits précédemment, il est possible de prévoir un pliage secondaire, consistant en un pliage de chaque section 13 ;113 ;213. Ce pliage secondaire est avantageusement réalisé avec des lignes de pliage secondaires parallèles aux lignes de pliage principal. Bien entendu, il est possible d'avoir un mode de pliage secondaire différent du mode de pliage principal.

Dans le cadre de l'invention, un pliage secondaire a pour avantage d'accroître l'effort de rappel en position pliée, qui est généré par l'écran lui-même. Par exemple, lorsqu'un pliage secondaire de type accordéon est appliqué au pliage principal décrit en référence aux Figures 2 et 3, cela a l'avantage de réduire l'encombrement en hauteur (suivant l'axe Z) de l'écran en configuration pliée. Les pliages des Figures 2 et 3 combinés avec un tel pliage secondaire, cumulent alors les avantages d'un très faible encombrement en largeur, d'un faible encombrement en hauteur, et d'un effort accru de rappel en position pliée. Cela s'applique de la même façon avec les mêmes effets si l'on applique à un pliage principal de type accordéon, un mode de pliage secondaire tel que décrit en référence aux figures 2 et 3.

On comprend, à la lecture de la description qui précède, que le pare-soleil selon l'invention est de structure extrêmement simplifiée par rapport aux pare-soleil de l'état de la technique, du fait que les moyens de rappel de l'écran en position pliée sont intégrés à l'écran lui-même. Les charnières, c'est-à-dire les régions de pliage de l'écran, participent elles-mêmes à l'effet de rappel élastique, et rendent inutile l'adjonction de systèmes mécaniques extérieurs à l'écran pour remplir la fonction de rappel en position escamotée ou pliée.

## Revendications

1. Pare-soleil pour véhicule automobile, comprenant :
- un écran de protection (11 ;111 ;211) ayant une pluralité de sections (13 ;113 ;213) reliées entre elles par des charnières (15 ;115 ;215), ledit écran (11 ;111 ;211) pouvant prendre une position pliée dans laquelle les sections (13 ;113 ;213) sont repliées les unes sur les autres, et une position déployée dans laquelle les sections sont dépliées,
- des moyens de rappel élastique associés à l'écran (11 ;111 ;211) et exerçant un effort de rappel à l'encontre du déploiement de l'écran à partir de sa position pliée,
**caractérisé en ce que** lesdits moyens de rappel comprennent les charnières (15 ;115 ;215) reliant les sections (13 ;113 ;213).

2. Pare-soleil suivant la revendication 1, **caractérisé en ce que** l'écran (11 ;111 ;211) est réalisé au moins partiellement dans un matériau à mémoire de forme ayant une forme initiale pliée.

3. Pare-soleil suivant la revendication 2, **caractérisé en ce que** la forme initiale de l'écran (11 ;111) est une forme pliée en accordéon.

4. Pare-soleil suivant la revendication 2, **caractérisé en ce que** la forme initiale de l'écran (211) est une forme pliée en créneaux.

5. Pare-soleil suivant l'une quelconque des revendications 2 à 4, **caractérisé en ce que** l'écran (11; 111; 211) dans sa forme initiale présente en outre un pliage secondaire suivant lequel chaque section (13 ;113 ;213) est elle-même pliée.

6. Pare-soleil suivant l'une quelconque des revendications 1 à 5, **caractérisé en ce qu'**il comprend des moyens (19) de fixation à une partie de véhicule, agencés au niveau d'une région de bord de l'écran (13A), et des moyens (21) d'accrochage à une autre partie (23) du véhicule, agencés au niveau d'une région de bord opposé de l'écran (13B), et qui permettent de maintenir l'écran (11 ;111 ;211) dans sa position déployée à l'encontre de l'effort de rappel élastique.

7. Pare-soleil suivant l'une quelconque des revendications 1 à 6, **caractérisé en ce qu'**il comprend une poignée de manoeuvre (27) solidaire de l'écran (11; 111; 211) au niveau d'une région de bord (13B) de ce dernier.

8. Portière de véhicule automobile comprenant un caisson creux (5), **caractérisée en ce qu'**elle comprend en outre un pare-soleil (3) suivant l'une quelconque des revendications 1 à 7, solidaire du caisson (5).

9. Portière de véhicule suivant la revendication 8, **caractérisée en ce que** le caisson (5) présente une ouverture (9) au niveau d'une face supérieure, et **en ce que** l'écran (11 ;111 ;211) est escamoté dans le caisson (5) dans sa position pliée, tandis qu'il fait saillie du caisson (5) au travers de ladite ouverture (9) dans sa position déployée.

10. Portière suivant la revendication 9, dans laquelle le pare-soleil (3) est de plus conforme à la revendication 7, **caractérisée en ce que**, dans la position pliée de l'écran (11 ;111 ;211), la poignée de manoeuvre (27) fait saillie du caisson (5).

11. Portière suivant l'une quelconque des revendications 8 à 10, dans laquelle le pare-soleil (3) est de plus conforme à la revendication 6, **caractérisée en ce qu'**elle comprend un cadre de vitre (7), solidaire du caisson (5), et ledit cadre (7) est muni de moyens complémentaires d'accrochage (25) prévus pour coopérer avec les moyens (21) d'accrochage du pare-soleil (3).
